# FASCICULE DE BREVET EUROPEEN

(11) **EP 3 160 719 B1**
(45) Date de publication et mention de la délivrance du brevet: **06.05.2020**
(21) Numéro de dépôt: 15731923.7
(22) Date de dépôt: 25.06.2015
(51) Int. Cl.: B29C 64/135, B29C 64/268, B29C 64/264

(54) **DISPOSITIF D'IMPRESSION TRIDIMENSIONNELLE**
VORRICHTUNG ZUM DREIDIMENSIONALEN DRUCKEN
THREE-DIMENSIONAL PRINTING DEVICE

(30) Priorité: 26.06.2014 FR 1455948
(43) Date de publication de la demande: 03.05.2017
(73) Titulaire: Université Grenoble Alpes, 38400 Saint-Martin-d'Hères (FR); Centre National de la Recherche Scientifique, 75794 Paris Cedex 16 (FR)
(72) Inventeur: BALDECK, Patrice, F-38220 Vizille (FR); BOURIAU, Michel, F-38402 Saint Martin d'Hères (FR)
(74) Mandataire: Cabinet Chaillot
(86) Numéro de dépôt international: PCT/EP2015/064459
(87) Numéro de publication internationale: WO 2015/197794

(56) Documents cités:
- EP-A1- 1 405 714
- EP-A2- 0 435 564
- EP-A2- 2 645 158
- JP-A- H01 228 828
- US-A1- 2003 052 105
- US-A1- 2003 214 571

## Description

### Domaine

La présente demande concerne un dispositif d'impression d'objet en trois dimensions (3D) plus couramment appelé imprimante 3D, et plus particulièrement une imprimante 3D utilisant une réaction photochimique induite par absorption multiphotonique à au moins deux photons.

### Exposé de l'art antérieur

Dans une imprimante 3D à absorption à deux photons, un faisceau laser de longueur d'onde et de puissance appropriées est focalisé en des points successifs d'un matériau de sorte que les régions du matériau situées aux points de focalisation successifs du faisceau se modifient par une réaction photochimique induite par absorption à au moins deux photons. Le matériau à modifier peut être de divers types. Ce matériau peut comprendre une résine se solidifiant par polymérisation ou photo-réticulation, une résine dont les propriétés de solubilité se modifient par photochimie, des protéines se solidifiant par photo-réticulation, ou des sels métalliques se solidifiant par photo-réticulation. L'excédent de matériau non modifié étant dissous par un solvant approprié après la modification. Les rendements de ces réactions photochimiques induites par absorption à deux photons sont proportionnels au carré de l'intensité du laser entraînant que la modification du matériau est très localisée.

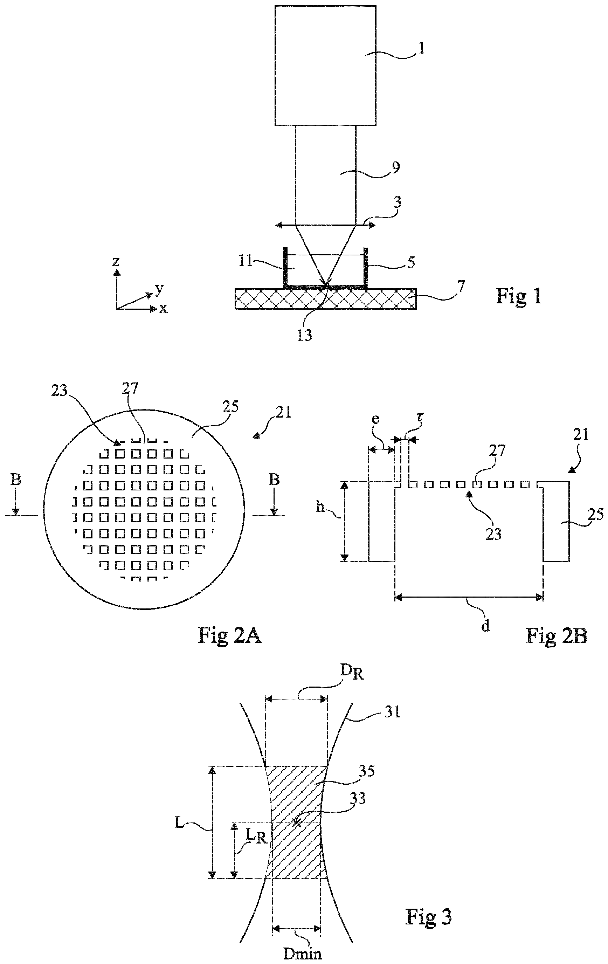

La figure 1 représente schématiquement un exemple d'imprimante 3D à absorption à deux photons. L'imprimante 3D comprend une source laser 1, un objectif de focalisation 3, et un bac 5 reposant sur une table XYZ 7 pouvant être déplacée selon des directions orthogonales (XY) et parallèle (Z) à la direction de propagation d'un faisceau laser 9 généré par la source 1. Le bac 5 est rempli d'un matériau 11 de l'un des types susmentionnés. On considère ci-après à titre d'exemple le cas où le matériau est une résine se solidifiant par photoréticulation.

En fonctionnement, le faisceau laser 9 est focalisé par l'objectif 3 en un point de focalisation 13 situé dans le matériau 11. Au point de focalisation 13, lorsque la puissance du laser est suffisante, le matériau 11 se solidifie localement ce qui forme un pixel volumique (voxel) de ce matériau. Dans la figure, le point de focalisation 13 est représenté comme étant au fond du bac 5. La table XYZ 7 est commandée de sorte que le point de focalisation 13 du faisceau 9 est déplacé dans le matériau 11 pour former d'autres voxels jusqu'à ce que tout le volume de l'objet à imprimer ait été solidifié.

L'utilisation d'une telle imprimante 3D permet de réaliser des voxels de dimensions inférieures au micromètre, voire à la centaine de nanomètres. Ces imprimantes ont donc essentiellement été développées pour la fabrication d'objets de très petites dimensions à motifs micrométriques ou sub-micrométriques. Lors de l'impression d'un objet dont les dimensions sont de l'ordre du millimètre ou du centimètre, en raison des très faibles dimensions des voxels, les temps d'impression deviennent très longs.

Il existe donc un besoin d'une imprimante 3D résolvant au moins certains des inconvénients des imprimantes 3D à absorption à deux photons classiques.

Les documents EP2645158, EP0435564, US2003/052105, EP1405714, JPH01228828 et US2003214571 décrivent des imprimantes 3D dans lesquelles un objet est élaboré à partir de la solidification de couches successives d'un matériau transformable.

### Résumé

Ainsi, un mode de réalisation prévoit une imprimante 3D à absorption à deux photons comprenant une source laser et un objectif de focalisation fournissant un faisceau laser focalisé en au moins un volume focal, caractérisée en ce qu'elle comprend en outre un système de déformation du front d'onde du faisceau laser, ce système étant associé à des moyens de commande propres à modifier la déformation du front d'onde en cours d'impression de façon à modifier les dimensions dudit au moins un volume focal.

Selon un mode de réalisation, ledit système comprend plusieurs lames dont chacune a une épaisseur irrégulière, les moyens de commande comprenant un carrousel plaçant l'une ou l'autre des lames sur le trajet du faisceau laser.

Selon un mode de réalisation, ledit système comprend une matrice de micro-miroirs, les moyens de commande comprenant des moyens de positionnement des micro-miroirs.

Selon un mode de réalisation, ledit système comprend une matrice de pixels à cristaux liquides, les moyens de commande comprenant des moyens de polarisation propres à orienter les cristaux liquides de chaque pixel.

Selon un mode de réalisation, l'imprimante 3D comprend un agrandisseur de faisceau en amont dudit système.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente schématiquement un exemple d'imprimante 3D à absorption à deux photons ;
les figures 2A et 2B représentent schématiquement un exemple d'objet à imprimer en 3D, la figure 2B étant une vue en coupe selon un plan BB de la figure 2A ;
la figure 3 est une vue schématique de la zone de focalisation d'un faisceau laser ;
la figure 4 représente schématiquement un mode de réalisation d'une imprimante 3D ;
les figures 5A et 5B représentent schématiquement un mode de réalisation d'un système de déformation du front d'onde utilisé dans l'imprimante 3D de la figure 4, la figure 5A étant une vue en coupe selon un plan AA de la figure 5B ;
les figures 6A et 6B représentent schématiquement un mode de réalisation d'un masque de phase ;
la figure 7 représente schématiquement un mode de réalisation d'un système de déformation de front d'onde à cristaux liquides ; et
la figure 8 représente schématiquement un mode de réalisation d'un système de déformation de front d'onde à micro-miroirs.

Par souci de clarté, de mêmes éléments ont été désignés par de mêmes références aux différentes figures et, de plus, les diverses figures ne sont pas tracées à l'échelle.

### Description détaillée

Les figures 2A et 2B représentent schématiquement un exemple d'objet à imprimer en 3D, la figure 2A étant une vue de dessus de l'objet, et la figure 2B étant une vue en coupe selon un plan BB de la figure 2A. L'objet à imprimer est un filtre 21 comprenant une grille de filtration 23 solidaire d'une bague 25. La grille, ou tamis, 23 comporte des motifs extrêmement fins qui doivent être réalisés avec une haute définition tandis que la bague 25 ne nécessite pas une très haute définition.

La grille 23 comporte un réseau de barreaux de petites dimensions ayant, par exemple, une largeur de 100 nm avec un intervalle τ entre barreaux de 200 nm. La bague 25 a une hauteur h de 0,5 mm, une épaisseur e de 0,2 mm, et un diamètre interne d de 0,5 cm.

Si on souhaite fabriquer le filtre 21 avec l'imprimante 3D de la figure 1 on devra, pour imprimer la grille 23 avec la précision souhaitée, choisir une imprimante telle que les voxels aient des dimensions inférieures ou égales à une centaine de nanomètres, ce qui entraîne que, pour imprimer la bague 25 ayant des dimensions au moins 1000 fois supérieures à celles des voxels, le temps d'impression devient très long.

On propose ici de modifier une imprimante 3D à absorption à deux photons du type de celle décrite en relation avec la figure 1 pour y intégrer un système permettant d'adapter, en cours d'impression, les dimensions des voxels en fonction des dimensions des différentes régions d'un objet à imprimer. Ainsi, la grille 23 du filtre 21 pourra être imprimée avec des voxels dont les dimensions sont inférieures à la centaine de nanomètres, et la bague 25 pourra être imprimée avec des voxels dont les dimensions sont environ 100 fois plus grandes, par exemple de 1 à 20 µm, par exemple de 2 à 10 µm.

La figure 3 est une vue en coupe illustrant schématiquement l'allure de la zone de focalisation d'un faisceau laser 31 focalisé en un point focal 33. Au niveau du point focal 33, le faisceau laser 31 présente une zone de convergence maximale pour laquelle le faisceau a un diamètre minimal (waist) Dₘᵢₙ. Le diamètre du faisceau augmente lorsqu'on s'éloigne de la zone de convergence maximale. En particulier, à une distance L_{R} (longueur de Rayleigh) de la zone de convergence maximale, le faisceau a un diamètre D_{R} égal à Dₘᵢₙ multiplié par racine de 2, et son énergie par unité de surface est égale à la moitié de l'énergie par unité de surface au niveau de la zone de convergence maximale.

On appelle volume focal 35 la portion volumique du faisceau laser 31 centrée sur la zone de convergence maximale et de longueur L égale à deux fois la longueur de Rayleigh L_{R}.

En pratique, le volume focal 35 correspond à la portion volumique du faisceau laser 31 dans laquelle l'énergie par unité de surface est suffisante pour induire une réaction photochimique par absorption à deux photons entraînant la solidification d'un matériau approprié et y former un voxel. Ainsi, en modifiant les dimensions d'un volume focal, on modifie les dimensions du voxel correspondant. Dans la suite de cette demande, D_{R}, Dₘᵢₙ, et L désignent respectivement le diamètre maximal, le diamètre minimal, et la longueur d'un volume focal ou d'un voxel.

Dans le cas d'un faisceau laser à front d'onde plan, le diamètre Dₘᵢₙ d'un volume focal 35 est inversement proportionnel à l'ouverture numérique ON de l'objectif de focalisation utilisé, et la longueur L du volume focal est proportionnelle au carré de Dₘᵢₙ. Si on diminue d'un facteur k l'ouverture numérique ON, on augmente d'un facteur k le diamètre Dₘᵢₙ et d'un facteur k² la longueur L de ce volume focal. Afin que l'énergie du faisceau reste suffisante pour induire une réaction chimique par absorption à deux photons, la puissance du faisceau laser est augmentée d'un facteur k². Par exemple, pour un volume focal de diamètre Dₘᵢₙ égal à 0,2 µm et de longueur L égale 0,7 pm, si l'ouverture numérique ON est diminuée d'un facteur 5, Dₘᵢₙ est multiplié par 5 et devient égal à 1 µm et L est multiplié par 25 et devient égal à 17,5 µm. Les voxels obtenus sont donc fortement étirés dans le sens de leur longueur et la définition en Z de l'impression devient très inférieure à la définition en XY ce qui pose de nombreux problèmes lors de l'impression d'un objet 3D.

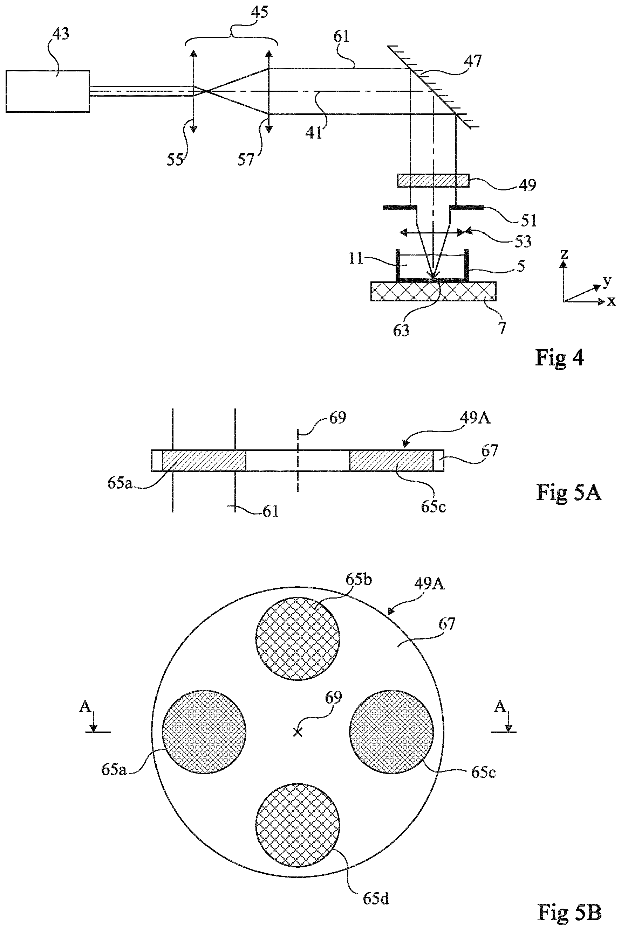

La figure 4 représente schématiquement un mode de réalisation d'une imprimante 3D à absorption à deux photons. L'imprimante 3D comprend successivement, sur un axe optique 41, une source laser 43, un agrandisseur de faisceau 45, un miroir plan 47, un système spécifique de déformation de front d'onde 49, un diaphragme 51, et un objectif de focalisation 53. Dans l'exemple représenté, l'agrandisseur de faisceau 45 comprend deux lentilles 55 et 57. Comme dans le cas de la figure 1, l'imprimante comprend un bac 5 disposé sur une table XYZ 7 et rempli d'un matériau 11 se solidifiant par une réaction photochimique induite par absorption à deux photons. Le faisceau laser 61 de sortie de l'agrandisseur 45 converge dans le matériau 11 en un point de focalisation 63.

Avant passage par le système de déformation de front d'onde 49, le front d'onde du faisceau laser est plan et orthogonal à l'axe optique 41. Le système de déformation de front d'onde 49 permet d'appliquer à des rayons du faisceau laser 61 des déphasages variant en fonction de la position de ces rayons dans le faisceau. Il en résulte une déformation du front d'onde du faisceau laser 61.

On utilise ici le fait que, lors de la focalisation d'un faisceau laser ayant subi une déformation spécifique de son front d'onde, le volume focal est d'autant plus grand que le front d'onde de ce faisceau est plus perturbé. Ainsi, en prévoyant un système adapté de déformation du front d'onde, les diamètres Dₘᵢₙ et D_{R} susmentionnés peuvent être augmentés sans que la longueur L n'augmente significativement. Ce système adapté peut être calculé par des programmes informatiques de simulation et d'itération pour obtenir le résultat souhaité. Ce type de programme est connu de façon générale (Voir par exemple R. di Leonardo et al, Optics Express, Vol. 15, N° 4, 19 février 2007) et pourra être utilisé dans le but proposé ici.

Le système de déformation de front d'onde 49 est associé à des moyens de commande non représentés. Ces moyens de commande permettent de modifier, pendant l'impression, la perturbation appliquée au front d'onde du faisceau pour adapter les dimensions des voxels aux dimensions des régions de l'objet en train d'être imprimé.

Les figures 5A et 5B représentent schématiquement un mode de réalisation d'un système de déformation de front d'onde 49A, la figure 5B étant une vue de dessus, et la figure 5A étant une vue en coupe selon le plan AA de la figure 5B. Le système de déformation de front d'onde 49A comprend plusieurs lames 65a, 65b, 65c et 65d d'épaisseurs irrégulières en un matériau transparent à la longueur d'onde d'un faisceau laser 61. Ces épaisseurs irrégulières sont calculées comme exposé ci-dessus. Lorsque le faisceau laser 61 traverse une des lames 65a, 65b, 65c ou 65d, les irrégularités d'épaisseurs de la lame entraînent des déphasages différents entre les rayons du faisceau 61 ce qui résulte en une déformation du front d'onde de ce faisceau. Les irrégularités d'épaisseurs sont différentes d'une lame à l'autre et chaque lame correspond à une déformation particulière du front d'onde. L'une des lames 65a, 65b, 65c et 65d peut avoir une épaisseur régulière n'entraînant pas de déformation du front d'onde du faisceau 61.

Les lames 65a, 65b, 65c et 65d, aussi appelées masques de phase, sont disposées dans un carrousel 67 pouvant tourner autour d'un axe 69 parallèle à la direction de propagation du faisceau 61. Des rotations du carrousel 67 autour de l'axe 69 permettent de disposer l'une ou l'autre des lames sur le trajet du faisceau laser 61. Ces rotations peuvent être commandées pendant l'impression pour obtenir différentes dimensions de voxels.

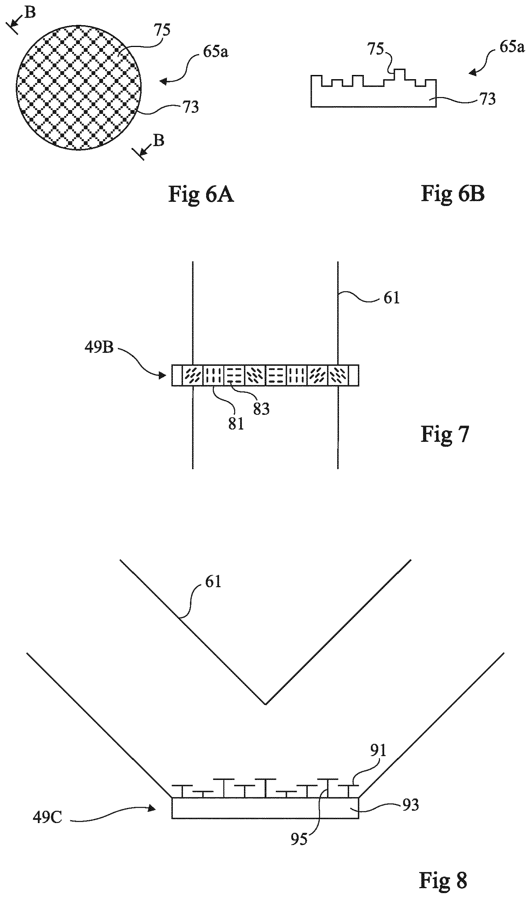

Les figures 6A et 6B illustrent schématiquement un mode de réalisation d'un masque de phase, par exemple le masque de phase 65a, la figure 6A étant une vue de dessus, et la figure 6B étant une vue en coupe selon le plan BB de la figure 6A. Le masque de phase 65a est constitué d'un disque 73 en un matériau transparent à la longueur d'onde du laser, le diamètre du disque 73 étant supérieur au diamètre d'un faisceau laser 61 traversant ce masque de phase 65a. Le disque 73 comprend une face plane et une face comportant des marches 75 ayant des bords abrupts. Le choix des dimensions et des positions des marches 75 conduit à une déformation particulière du front d'onde, et donc à une modification donnée des dimensions des voxels. On pourra par exemple passer de voxels ayant des dimensions Dₘᵢₙ égale à 0,2 µm et L égal à 0,7 µm, à des voxels ayant des dimensions Dₘᵢₙ et L similaires et comprises entre 1 et 20 pm, par exemple égales respectivement à 7,5 µm et 10 µm.

La figure 7 est une vue en coupe représentant schématiquement un autre mode de réalisation d'un système de déformation de front d'onde 49B. Le système 49B comprend une matrice de pixels 81 transparents à la longueur d'onde d'un faisceau laser 61, chaque pixel 81 comprenant des cristaux liquides 83 disposés entre deux électrodes de polarisation non représentées. Le dispositif 49B est disposé dans un plan orthogonal à la direction de propagation d'un faisceau laser 61 de sorte que ce faisceau traverse la matrice de pixels.

Les électrodes de polarisation permettent de commander l'orientation des cristaux liquides 83 dans chaque pixel 81 ce qui conduit à des déphasages différents entre les rayons du faisceau 61. L'orientation des cristaux liquides de chacun des pixels 81 est commandée en cours d'impression pour effectuer différentes déformations du front d'onde entraînant l'obtention de différentes dimensions de voxels.

La figure 8 est une vue en coupe représentant schématiquement un autre mode de réalisation d'un système de déformation de front d'onde 49C. Le système comprend une matrice de micro-miroirs 91, chaque micro-miroir étant lié à un même support 93 par l'intermédiaire de micro-pistons 95 permettant de modifier la position de chaque micro-miroir. Le système 49C est disposé de sorte qu'un faisceau laser 61 frappant les micro-miroirs 93 soit réfléchi en direction d'un objectif de focalisation 53. A titre d'exemple, le système 49C est disposé à la place du miroir plan 47 de l'imprimante 3D de la figure 4.

Lorsque le faisceau laser 61 est réfléchi par la matrice de micro-miroirs, les différences de position des micro-miroirs de la matrice entraînent des différences de déphasage entre les rayons du faisceau 61 d'où il résulte une déformation du front d'onde du faisceau. Les micro-pistons 95 sont commandés de façon à permettre de modifier, en cours d'impression, les positions des micro-miroirs 93 pour obtenir différentes déformations du front d'onde et donc différentes dimensions de voxels.

Des modes de réalisation particuliers ont été décrits. Diverses variantes et modifications apparaîtront à l'homme de l'art. En particulier, bien que l'on ait décrit une imprimante 3D en relation avec la figure 4 dans laquelle la position du point de focalisation est modifiée par le déplacement d'une table XYZ, la position du point de focalisation pourra être modifiée par d'autres moyens, par exemple, en ce qui concerne le déplacement en Z, par un déplacement de l'objectif de focalisation, et en ce qui concerne le déplacement en XY, par l'utilisation de miroirs orientables ou d'un déflecteur acousto-optique.

Bien que l'on ait décrit en relation avec les figures 6A et 6B un mode de réalisation d'un masque de phase comportant des marches ayant des bords abrupts, les irrégularités d'épaisseurs du masque de phases pourront être obtenues avec des marches ayant des profils arrondis. Les masques de phase pourront être remplacés par d'autres éléments optiques introduisant une déformation du front d'onde d'un faisceau laser les traversant. On pourra, par exemple, utiliser des matrices de microlentilles.

On a décrit en relation avec les figures 5A, 5B, 6A, 6B, 7 et 8 trois modes de réalisation d'un système de déformation de front d'onde, ces systèmes comprenant des moyens pour modifier de manière discrète ou continue la déformation du front d'onde en cours d'impression. L'homme de l'art pourra utiliser tous autres types connus de systèmes commandés de déformation du front d'onde d'un faisceau laser. On pourra par exemple utiliser des SLM (Spatial Light Modulator - modulateur spatial de lumière), des DMD (Digital Micromiror Device - dispositif numérique à micro-miroirs), des miroirs déformables, et des valves optiques à cristaux liquides.

Bien que l'on ait décrit des systèmes de déformation de front d'onde 49A et 49B disposés entre le miroir plan 47 et le diaphragme 51 de l'imprimante 3D décrite en relation avec la figure 4, et un système 49C disposé à la place du miroir plan 47, la position du système de déformation de front d'onde dans l'imprimante 3D de la figure 4 pourra être modifiée par l'homme de l'art. Plus généralement, dans une imprimante 3D du type de celle décrite en relation avec la figure 4, on pourra ajouter ou supprimer des éléments optiques. En particulier, on pourra supprimer le miroir de renvoi 47, ou ajouter d'autres miroirs de renvoi pour rendre le dispositif plus ou moins compact.

Bien que l'on ait décrit un procédé d'impression dans lequel tout le volume d'un objet à imprimer est solidifié en réalisant successivement de nombreux voxels, on pourra choisir de n'imprimer que l'enveloppe (les parois) de l'objet à imprimer ou d'une partie de cet objet (la bague dans l'exemple du filtre donné ci-dessus).

En complément de ce qui a été décrit précédemment, on pourra prévoir d'adapter les conditions de focalisation du faisceau, par exemple en modifiant l'ouverture numérique ou l'objectif de focalisation.

On a considéré le cas où l'imprimante est prévue pour qu'il y ait à chaque instant un seul point de focalisation d'un faisceau laser. Si plusieurs points de focalisation coexistent, la déformation du front d'onde susmentionnée s'appliquera à chacun, et seulement à chacun de ces points de focalisation.

On a décrit des modes de réalisation d'une imprimante 3D dans laquelle le matériau à modifier au niveau du volume focal d'un faisceau laser est disposé dans un bac 5. Dans d'autres modes de réalisation, ce matériau pourra être directement disposé sur un support tel qu'une plaque de verre ou de silicium.

Bien que l'on ait décrit des modes de réalisation d'une imprimante 3D par absorption à deux photons, ce qui a été décrit précédemment s'applique à des réactions photochimiques induites par absorption multiphotonique.

## Revendications

1. Imprimante 3D à absorption à deux photons comprenant une source laser (43) et un objectif de focalisation (53) fournissant un faisceau laser focalisé en au moins un volume focal (35), **caractérisée en ce qu'**elle comprend en outre un système de déformation du front d'onde (49, 49A, 49B, 49C) du faisceau laser (61) adapté à augmenter la section d'un volume focal sans augmenter significativement sa profondeur, ce système étant associé à des moyens de commande (67, 95) propres à modifier la déformation du front d'onde en cours d'impression de façon à modifier les dimensions dudit au moins un volume focal.

2. Imprimante 3D selon la revendication 1, dans laquelle ledit système (49A) comprend plusieurs lames (65a, 65b, 65c, 65d) dont chacune a une épaisseur irrégulière, les moyens de commande comprenant un carrousel (67) plaçant l'une ou l'autre des lames sur le trajet du faisceau laser (61).

3. Imprimante 3D selon la revendication 1, dans laquelle ledit système (49C) comprend une matrice de micro-miroirs (91), les moyens de commande comprenant des moyens de positionnement (95) des micro-miroirs.

4. Imprimante 3D selon la revendication 1, dans laquelle ledit système (49B) comprend une matrice de pixels (81) à cristaux liquides (83), les moyens de commande comprenant des moyens de polarisation propres à orienter les cristaux liquides de chaque pixel.

5. Imprimante 3D selon l'une quelconque des revendications 1 à 4, comprenant un agrandisseur de faisceau (45) en amont dudit système (49, 49A, 49B, 49C).

## Patentansprüche

1. 3D-Drucker mit Zweiphotonen-Absorption, umfassend einen Ausgangslaser (43) und ein Fokussierungsobjektiv (53), die einen Laserstrahl bereitstellen, der auf mindestens ein Fokalvolumen (35) fokussiert ist, **dadurch gekennzeichnet, dass** er ferner ein Wellenfrontverformungssystem (49, 49A, 49B, 49C) des Laserstrahls (61) umfasst, das geeignet ist, um den Schnitt eines Fokalvolumens zu vergrößern, ohne seine Tiefe wesentlich zu vergrößern, wobei dieses System mit Steuermitteln (67, 95) verknüpft ist, die in der Lage sind, die Verformung der Wellenfront im Verlauf des Druckvorgangs derart zu ändern, dass die Dimensionen des mindestens einen Fokalvolumens geändert werden.

2. 3D-Drucker nach Anspruch 1, wobei das System (49A) mehrere Lamellen (65a, 65b, 65c, 65d) umfasst, die jeweils eine ungleichmäßige Dicke aufweisen, wobei die Steuermittel ein Karussell (67) umfassen, das die eine oder die andere der Lamellen auf den Weg des Laserstrahls (61) setzt.

3. 3D-Drucker nach Anspruch 1, wobei das System (49C) eine Mikrospiegelmatrix (91) umfasst, wobei die Steuermittel Mittel (95) zum Positionieren der Mikrospiegel umfassen.

4. 3D-Drucker nach Anspruch 1, wobei das System (49B) eine Pixelmatrix (81) aus Flüssigkristallen (83) umfasst, wobei die Steuermittel Polarisationsmittel umfassen, die in der Lage sind, die Flüssigkristalle jedes Pixels zu orientieren.

5. 3D-Drucker nach einem der Ansprüche 1 bis 4, umfassend einen Strahlenvergrößerer (45) stromaufwärts von dem System (49, 49A, 49B, 49C).

## Claims

1. A two-photon absorption 3D printer comprising a laser source (43) and a focusing lens (53) supplying a laser beam focused in at least one focal volume (35), **characterized in that** it further comprises a system for deformation of the wave front (49, 49A, 49B, 49C) of the laser beam (61) adapted to increase the section of a focal volume without significantly increasing its depth, this system being associated with control means (67, 95) capable of modifying the deformation of the wave front during printing so as to modify the dimensions of said at least one focal volume.

2. The 3D printer according to claim 1, wherein said system (49A) comprises several blades (65a, 65b, 65c, 65d), each of which has an irregular thickness, the control means comprising a carousel (67) placing one or another of the blades on the path of the laser beam (61).

3. The 3D printer according to claim 1, wherein said system (49C) comprises a matrix of micro-mirrors (91), the control means comprising positioning means (95) of the micro-mirrors.

4. The 3D printer according to claim 1, wherein said system (49B) comprises a matrix of pixels (81) with liquid crystals (83), the control means comprising polarizing means able to orient the liquid crystals of each pixel.

5. The 3D printer according to any one of claims 1 to 4, comprising a beam extender (45) upstream from said system (49, 49A, 49B, 49C).
